# EUROPEAN PATENT APPLICATION

(11) **EP 2 110 923 A1**
(43) Date of publication of application: **21.10.2009**
(21) Application number: 08711044.1
(22) Date of filing: 08.02.2008
(51) Int. Cl.: H02J 7/02, B60L 11/18, H01M 10/44, H02J 7/00

(54) **CHARGER**

(30) Priority: 09.02.2007 JP 2007031180
(71) Applicant: Kyushu Electric Power Co., Inc., Fukuoka 810-8720 (JP)
(72) Inventor: KURAYAMA, Koji, Fukuoka-shi Fukuoka 810-8720 (JP); ADACHI, Kazuyuki, Fukuoka-shi Fukuoka 810-8720 (JP); MURAKAMI, Shinji, Fukuoka-shi Fukuoka 810-8720 (JP); WADA, Yoshihiro, Fukuoka-shi Fukuoka 810-8720 (JP); SHIBATA, Hiroyuki, Fukuoka-shi Fukuoka 810-8720 (JP)
(74) Representative: Vossius & Partner
(86) International application number: PCT/JP2008/052165
(87) International publication number: WO 2008/096861

(57) **Abstract**

The present invention provides a battery charger capable of charging a plurality of secondary batteries which are used in different types of apparatuses, such as an electric vehicle and a mobile power supply unit, in a simultaneous or concurrent manner without largely occupying an installation space on the ground. A DC power supply section 22 includes a plurality of DC stabilized power supply circuits each operable to supply an output according to required electric power, therefrom in an independent manner. Specifically, based on information from each of a plurality of secondary batteries, and information set up/input through a setup/input section, one of or a combination of two or more of the DC stabilized power supply circuits is selected for each of the secondary batteries. Then, an electric power supply line between the selected one of or the selected combination of two or more of the DC stabilized power supply circuits and each of the secondary batteries to be charged is configured, and an output of the selected one of or the selected combination of two or more of the DC stabilized power supply circuits is adjusted. This makes it possible to configure respective electric power supply lines for the secondary batteries to allow the secondary batteries to be concurrently charged, and adjust respective electric power amounts to be supplied to the secondary batteries, individually.

## Description

### TECHNICAL FIELD

The present invention relates to a battery charger capable of simultaneously supplying electric powers to a plurality of secondary batteries, respectively, as required by respective ones of the secondary batteries.

### BACKGROUND ART

A vehicle with a gasoline engine or a diesel engine causes environment pollution, due to CO₂, NOx, black smoke or harmful particulate matter which is contained in exhaust gas discharged therefrom. Therefore, in view of environmental conservation, it is expected to put an emission-free electric vehicle to practical use. A secondary (rechargeable) battery mounted to an electric vehicle, generally called "large secondary battery", includes a lead secondary battery, a nickel-metal-hydride secondary battery and a lithium-ion secondary battery. Developments of the secondary battery, such as reduction in size and weight, and increase in battery capacity, are regarded as an urgent challenge to expand use of battery-operated electric apparatuses including electric vehicles. Presently, the lithium-ion secondary battery is technically expected as a type having the highest potential.

In electric apparatuses using the secondary battery as a power supply, an amount of energy stored in the secondary battery will be gradually reduced along with use thereof, and therefore a charging operation is essential. However, as another challenge to expand use of the secondary battery, there exists a problem of a relatively long charging time. Thus, a technique of reducing the charging time is also being developed. Japan Electric Vehicle Association (JEVS) defines a battery-charge mode where a charging operation is completed within 30 minutes when it is performed under a maximum charging output of 50 KW, as "rapid charge mode". Along with the developments of the secondary battery, there is an increasing need for enhancing a function of a battery-charging facility or station, and technical developments for a battery-charging station capable of readily charging a secondary battery, e.g., in the rapid charge mode, also become a critical challenge.

Heretofore, as a battery charger for secondary batteries, the following techniques have been proposed.

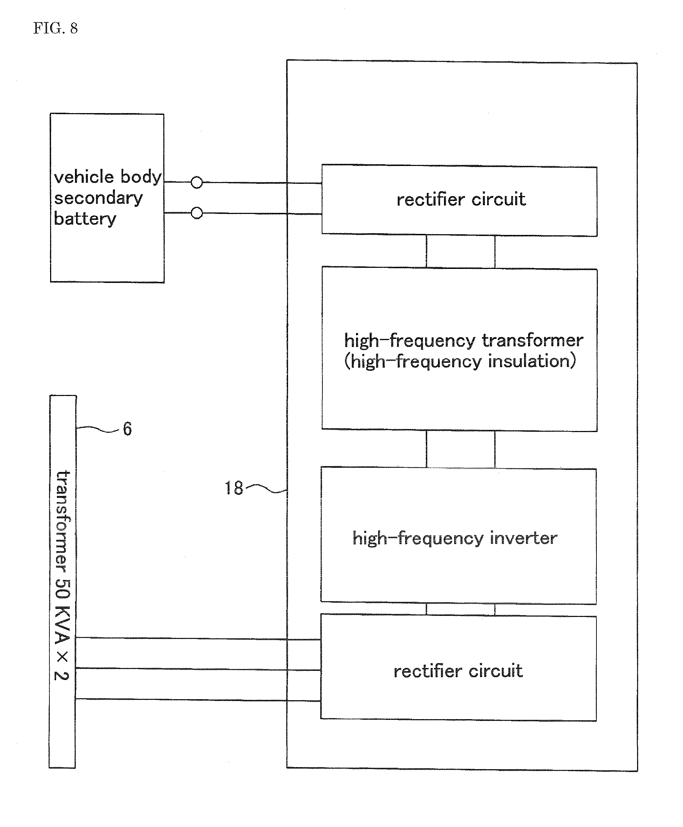

FIG. 8 is a block diagram of a conventional battery charger.

AC power is fed from a transformer 6 to a battery charger 18. The battery charger 18 is operable to rectify the AC power to DC power and charge a secondary battery with the DC power. A typical battery charger is adapted to receive AC commercial power, and therefore configured to have a first rectifier circuit for rectifying AC power, a high-frequency inverter for converting the AC power into DC power, a high-frequency transformer for increasing a voltage, and a second rectifier circuit for rectifying the DC power. Although this configuration is modified depending on a type of electric power to be received, the circuit operable to rectify AC power to DC power suitable for charging a secondary battery is generally called "DC stabilized power supply circuit".

The battery charger illustrated in FIG. 8 is capable of charging only one secondary battery, because the number of outputs from the DC stabilized power supply circuit is only one. In view of this poor functionality, there has been proposed another type of battery charger capable of concurrently charging a plurality of secondary batteries.

For example, the following Patent Document 1 discloses a battery-charging control system for charging a plurality of secondary batteries mounted to respective electric vehicles, with electric power in a midnight electric power-available period. The battery-charging control system disclosed in the Patent Document 1 comprises discharge-amount measurement means operable to measure discharge amounts in respective ones of the secondary batteries, charging-time determination means operable to determine charging times in accordance with respective ones of the discharge amounts, and charging-time zone setting means operable to set time zones for charging the respective ones of the secondary batteries, in such a manner that a charging operation for one of the secondary batteries having a longest one of the charging times determined by the charging-time determination means is initiated at a start timing of the midnight electric power-available period, and a charging operation for one of the remaining secondary batteries having a shortest one of the charging times is completed at an end timing of the midnight electric power-available period.

Further, the following Patent Document 2 discloses a battery-charging system capable of simultaneously charging a plurality of secondary batteries mounted to respective electric vehicles, using a single battery charger, wherein each of the electric vehicles has a vehicle body provided with an electric power-receiving port for receiving electric power, and an electric power-feeding port for feeding a part of the received electric power to an adjacent one of the remaining electric vehicles, while bypassing the secondary battery, and the electric power-receiving port and the electric power-feeding port in one of the electric vehicles are connected, respectively, to an electric power feeder (battery charger) and the electric power-receiving port in an adjacent one of the remaining electric vehicle, to simultaneously charge the secondary batteries mounted to the respective electric vehicles.
[Patent Document 1] JP 10-80071A
[Patent Document 2] JP 10-117444A

### DISCLOSURE OF THE INVENTION

### [PROBLEM TO BE SOLVED BY THE INVENTION]

The battery charger illustrated in FIG. 8 is capable of charging only one secondary battery, because the number of charging outputs for electric vehicles is one. Thus, if a plurality of electric vehicles come in a battery-charging station, any electric vehicle coming after the earliest electric vehicle will undergo a long waiting time even though a charging amount is relatively small. Further, it is commonly believed that a DC power supply unit having a large capacity of 30 KW or more is required to allow an electric vehicle-mounted secondary battery, such as a lithium-ion secondary battery, to be charged in the rapid charge mode. Thus, a size of the battery charger becomes larger, and a total weight thereof is increased to 300 kg or more. Moreover, it is necessary to largely occupy a site for installation of the battery charger, and spend a high installation cost. Thus, in the existing circumstances, the battery charger cannot be installed in a high land-value location or in a narrow space.

In the technique disclosed in the Patent Document 1, the electric power supply line for charging a plurality of secondary batteries is configured to feed electric power from a DC power supply section via a single line, and simply connect the plurality of secondary batteries in parallel, wherein a charging operation for a first one of the secondary batteries having the largest charging amount is initiated by priority, and then a charging operation for each of the remaining secondary batteries having relatively small charging amount will be initiated after being postponed until a residual battery capacity of the first secondary battery becomes equal to a residual battery capacity in each of the remaining secondary batteries. Then, when the charging operations for the remaining secondary batteries are sequentially initiated after initiation of the charging operation for the first secondary battery, and two or more of the secondary batteries are being simultaneously charged, the electric power fed from the DC power supply section is equally divided and distributed to the secondary batteries. An end timing of all the charging operations is dependent on the longest charging time. Moreover, the battery-charging control system is designed to utilize midnight electric power, and thereby cannot adequately function as a battery charger during daytime. The battery-charging control system is required to have means for measuring discharge amounts in respective ones of the secondary batteries to set time zones for charging the respective ones of the secondary batteries, in addition to a large-capacity DC power supply unit, which leads to an increase in size of a battery charger to be installed.

The battery-charging system disclosed in the Patent Document 2 is required to provide the electric power-receiving port and the electric power-feeding port to the vehicle body of each of the electric vehicles. Further, the battery-charging system has the same configuration of an electric power supply line for charging the plurality of secondary batteries, as that in the Patent Document 1, and therefore requires a large-capacity DC power supply unit, which leads to an increase in size of the battery charger. Moreover, the battery-charging system is designed to perform a charging operation under a condition that the plurality of electric vehicles which are different in residual battery capacity, are connected to each other. Thus, the battery-charging system has a disadvantage that a charging time becomes longer, and even a part of the electric vehicles having a relatively short charging time, i.e., a relatively small charging amount (relatively large residual battery capacity), are obliged to wait for supply of electric power.

It is therefore an object of the present invention to provide a battery charger capable of concurrently charging a plurality of secondary batteries, while adjusting respective electric powers to be supplied to the secondary batteries, individually, so as to charge each of the secondary batteries in an independent manner without mutual interference between the secondary batteries to be concurrently charged. It is another object of the present invention to provide a battery charger capable of charging a plurality of secondary batteries in the rapid charge mode without increasing a capacity of a DC stabilized power supply circuit in a DC power supply section and largely occupying an installation space on the ground.

### [MEANS FOR SOLVING THE PROBLEM]

The present invention provides a battery charger having a plurality of connection sections for allowing a plurality of secondary batteries to be connected to respective ones thereof so as to supply electric power required by a respective one of the secondary batteries, to the respective one of the secondary batteries therethrough. The battery charger comprises: communication means operable to acquire information from each of the secondary batteries connected to the respective ones of the connection sections; an input section adapted to allow an operator to setup/input a charging condition for each of the secondary batteries; a DC power supply section including a plurality of DC stabilized power supply circuits each operable to receive external electric power and supply chargeable DC electric power; and a control section operable, based on information from the communication means and information from the input section, to control selection of one of or a combination of two or more of the DC stabilized power supply circuits to be used for supplying electric power to the respective one of the secondary batteries, adjustment of an output to be supplied to the respective one of the secondary batteries, and configuration of a line for supplying electric power to the respective one of the secondary batteries.

As above, the DC power supply section includes the plurality of DC stabilized power supply circuits each operable to supply an output according to the required electric power, therefrom via an independent line. Specifically, based on information from each of the secondary batteries, and information set up/input through the input section, one of or a combination of two or more of the DC stabilized power supply circuits is selected to meet a requirement of being capable of supplying electric power required by the respective one of the secondary batteries. Then, an electric power supply line between the selected one of or the selected combination of two or more of the DC stabilized power supply circuits and each of the secondary batteries is configured, and an output of the selected one of or the selected combination of two or more of the DC stabilized power supply circuit is adjusted. This makes it possible to configure respective electric power supply lines for the secondary batteries to allow the secondary batteries to be concurrently charged, and adjust respective electric power amounts to be supplied to the secondary batteries, individually.

A central processing unit (CPU), such as an overcharge protection circuit adapted to manage the respective information, is mounted to each of the plurality of secondary batteries to be connected to the battery charger, such as a lead secondary battery, a nickel-metal-hydride secondary battery or a lithium-ion secondary battery for a battery-operated apparatus, e.g., a mobile power supply unit or an electric vehicle. Although a type of communication system varies depending on the apparatus, the battery charger can acquire information about a secondary battery only by connecting the secondary battery thereto, as long as the secondary battery has a conventional two-way communication system, such as RS-232C, CAN, wireless LAN or PLC. Further, even if the plurality of secondary batteries are different in charging voltage or communication means, the battery charger can simultaneously charge the secondary batteries connected thereto, as required by respective ones of the secondary batteries.

### [EFFECT OF THE INVENTION]

In the present invention, as an improvement in infrastructure for charging of secondary batteries, the plurality of DC stabilized power supply circuits are provided in the DC power supply section to allow an electric power supply line to be configured as a plurality of independent lines, so that electric powers to be supplied to respective ones of a plurality of secondary batteries can be adjusted individually. This makes it possible to charge a plurality of secondary batteries which are used in different types of apparatuses, such as an electric vehicle and a mobile power supply unit, in a simultaneous or concurrent manner, and charge the secondary batteries according to a desired battery-charge mode, such as the rapid charge mode, which is arbitrarily input from the input section in advance, without relation to conditions of the control section of battery charger

In the present invention, the number and respective outputs of the DC stabilized power supply circuits can be adjusted depending on the number and respective charging conditions of the secondary batteries to be concurrently charged.

In the present invention, an output of each of the DC stabilized power supply circuits can be optimally maintained without a need for a large-capacity DC power supply circuit.

In the present invention, only one of the secondary batteries can be selectively charged in the rapid charge mode, or two or more of the secondary batteries can be selectively charged in the rapid charge mode. This makes it possible to effectively improve charging efficiency, and effectively reduce a charging time and an installation cost.

Further, even if a trouble occurs in one of the DC stabilized power supply circuits, a remaining one of the DC stabilized power supply circuits can be used as its backup. The DC stabilized power supply circuits may be separated from remaining components of the battery charger, and remote-controlled. For example, only the connection sections for the secondary batteries and the input sections each adapted to allow an operator or user to set up/input charging conditions may be installed in a battery-charge area, while arranging the DC stabilized power supply circuits on a column, or below the ground, or in another site, so as to facilitate effective utilization of the battery-charge area. Thus, in case where a plurality of secondary batteries mounted to respective electric vehicles are charged, the battery charger can concurrently charge the secondary batteries while effectively reducing a charging time, under a condition that it is installed in a relatively narrow space, as long as the space is enough to park the electric vehicles.

Each of the battery-charge operating devices may have a function of accessing an information communication system. In this case, an operator or user can pay a fee by a credit card, or use an information communication service, such as an Internet service, during a waiting period, i.e., during a charging operation, to facilitate effective utilization of the waiting period. This makes it possible to effectively enhance a function of a facility as a service station.

### BEST MODE FOR CARRYING OUT THE INVENTION

With reference to the drawings, the present invention will be described based on an embodiment thereof.

### [FIRST EMBODIMENT]

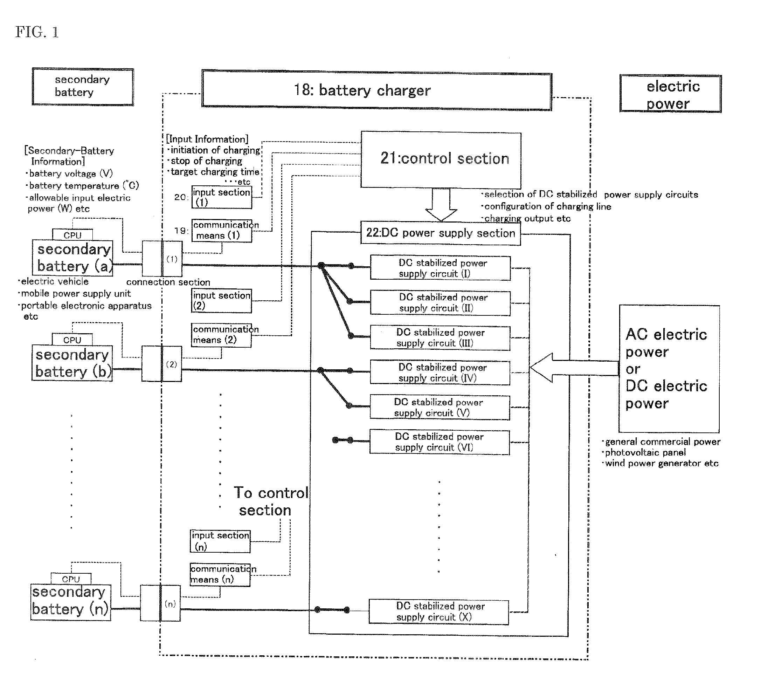

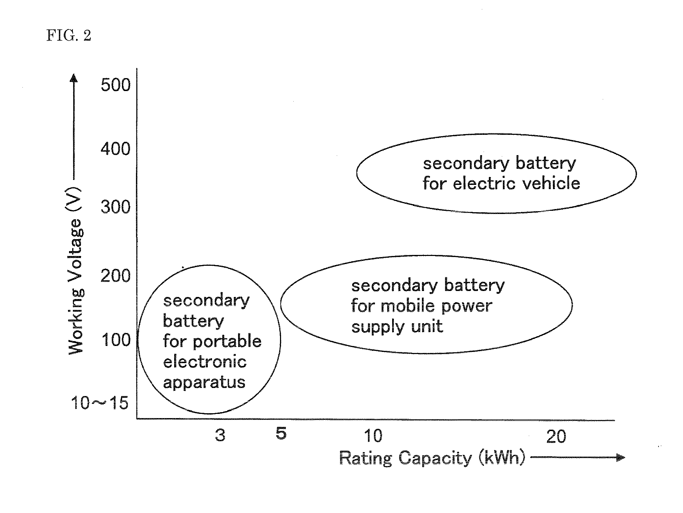

FIG. 1 is a block diagram showing an operation of a battery charger according to a first embodiment of the present invention, and FIG. 2 is a chart showing an example of a secondary battery capable of using a battery charger of the present invention.

A plurality of secondary batteries (a) to (n) are connected to the battery charger through respective ones of a plurality of connection sections (1) to (n). Each of the secondary batteries (a) to (n) is also connected to a control section 21 through communication means 19, to allow secondary-battery information held by a CPU mounted in each of the secondary batteries (a) to (n), such as a battery voltage (V), a battery temperature (°C) and an allowable input electric power value (W), to be transmitted to the control section 21.

For example, the secondary battery includes: a secondary battery for an electric vehicle, which has an operating voltage of about 350 V and a rating capacity of about 10 to 25 KWh; a secondary battery for a mobile power supply unit, which has an operating voltage of about 100 to 200 V and a rating capacity of about 5 to 20 KWh; a secondary battery for a small-size portable electronic apparatus, such as a personal computer or a mobile phone, which has an operating voltage of about 10 to 15 V; and a secondary battery for a household emergency power supply unit or a power supply unit used in engineering works, such as civil engineering and construction work and electrical work, which has an operating voltage of about 100 to 200 V and a rating capacity of about 1 to 5 KWh.

A user of the battery charger first selects input information, such as a battery-charge mode which meets user's need, and then gives an instruction for initiating a charging operation, through the use of an input section 20 associated with each of the connection sections (1) to (n). In response to this instruction, the control section 21 is operable to perform a calculation based on the secondary-battery information obtained through the communication means 19 and the input information from the input section 20. Then, the control section 21 is operable, based on a result of the calculation, to select a most suitable one of or a most suitable combination of two or more of a plurality of DC stabilized power supply circuits (I) to (X) provided in a DC power supply section 22 and placed in a standby state, and determine a configuration of an electric power supply line between the selected one of or the selected combination of two or more of the DC stabilized power supply circuits and the target secondary battery to be charged, and a voltage (V) and electric power (KW) of an output of the selected one of or the selected combination of two or more of the DC stabilized power supply circuits, so as to issue a battery-charging instruction to the DC power supply section 22.

In response to the battery-charging instruction from the control section 21, the DC power supply section 22 is operable to adjust AC or DC electric power fed thereto, to be electric power corresponding to the battery-charging instruction, and configure the electric power supply line between the selected one of or the selected combination of two or more of the DC stabilized power supply circuit and the target secondary battery. Then, the DC power supply section 22 is operable to initiate a charging operation.

Each of the target secondary batteries is charged according to a residual battery capacity thereof and a selected battery-charge mode. Specifically, the second battery (a) is being charged in the rapid charge mode using three (I), (II), (III) selected from the DC stabilized power supply circuits. Further, the second battery (b) is being charged using two (IV), (V) selected from the DC stabilized power supply circuits. In advance of the charging operation, the DC stabilized power supply circuits are optimally combined, so that operating efficiency of the battery charger can be enhanced. Specifically, if it is necessary to perform the charging operation in the rapid charge mode according to the calculation result, a combination of two or more of the DC stabilized power supply circuits can be selected in advance of initiation of the charging operation.

When the charging operation for any one of the second batteries (a) to (n) is completed, the second battery is operable to transmit a battery-charge completion signal to the control section 21 as one of the secondary-battery information. In response to receiving this information through the communication means 19, the control section 21 is operable to instruct the DC power supply section 22 to stop the charging operation.

Each of the secondary batteries has unique information necessary for a charging operation therefor. In addition, the secondary batteries are different in the type of communication means, and a configuration of a rectifier circuit in each of the DC stabilized power supply circuits varies depending on the type of electric power to be received. Thus, a configuration and a capacity of the rectifier circuit in each of the DC stabilized power supply circuits, the number of the rectifier circuits in each of the DC stabilized power supply circuits, the type of communication means, means for configuring the electric power supply line, and means for selecting the DC stabilized power supply circuits, may be determined depending on the type of electric power to be received, the number of target secondary batteries, and the type of target secondary battery. Further, a size and a configuration of the battery charger to be installed may be selected and determined by installation personnel according to common practice.

For example, it would be reasonable that an output of one DC stabilized power supply circuit is set in the range of 6 to 25 KW, and a plurality of such DC stabilized power supply circuits are provided in the DC power supply section. More specifically, given that an output of each of the DC stabilized power supply circuits is set at 12 KW, and the rapid charge mode requires a maximum output of 50 KW, the number of the DC stabilized power supply circuits may be set at four to obtain an approximately satisfactory output. Further, in this case, when it is necessary to provide three connection sections for respective target secondary batteries, the number of the DC stabilized power supply circuits each having an output of 12 KW may be set at twelve to obtain outputs capable of simultaneously charging three secondary batteries in the rapid mode.

It is understood that, if it is not necessary to simultaneously charge three secondary batteries in the rapid mode, the number of the DC stabilized power supply circuits may be reduced, in consideration of utilization factor and cost.

### [SECOND EMBODIMENT]

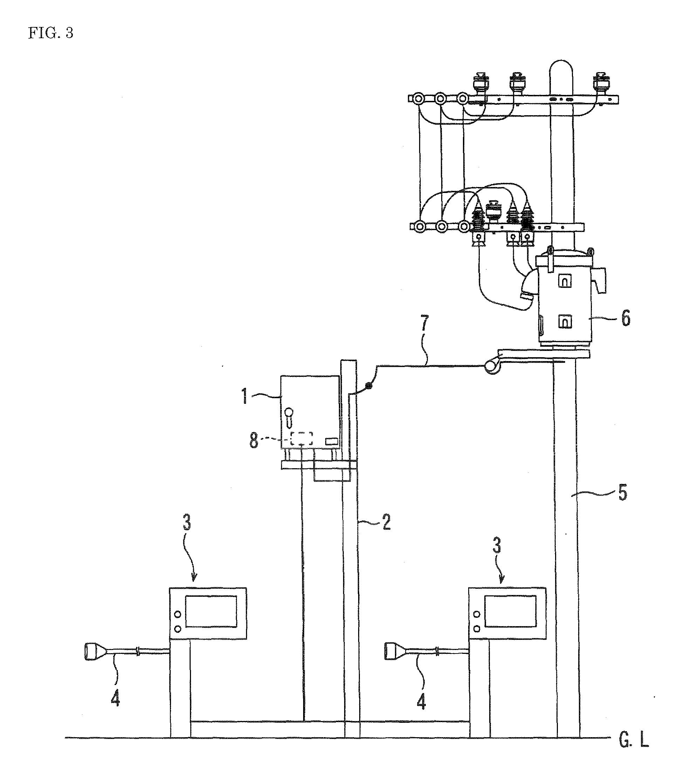

FIG. 3 is an overall view schematically showing an electric vehicle battery charger according to a second embodiment of the present invention.

The electric vehicle battery charger (hereinafter referred to simply as "battery charger") comprises a DC power supply section 1 installed on an upper portion of an installation column 2 provided in a site to extend vertically upwardly from the ground, and a plurality of battery-charge operating devices 3 each installed on the ground. Each of the battery-charge operating devices 3 includes a charging feed cable 4 adapted to be connected to a secondary battery of an electric vehicle to charge the secondary battery. The DC power supply section 1 is adapted to be supplied with electric power from a transformer 6 on a utility-line pole 5 or an underground transformer (not shown) via a feed cable 7, such as an aerial service line or an underground cable line, or to be supplied with electric power from a storage power supply facility, such as a photovoltaic facility or a wind power generation facility.

Each of the charging feed cable 4 and the feed cable 7 incorporates a communication line, so that a user can access the Internet or a dedicated line for reservation, using a communication line of an electric vehicle, the charging feed cable 4, the feed cable 7 and a communication line on the utility-line pole, to use an information communication system during a waiting period for a charging operation. Each of the battery-charge operating devices 3 is adapted to be supplied with DC electric power through an output distribution unit 8 of the DC power supply section 1.

The DC power supply section 1 is installed on the upper portion of the installation column 2, so that it can be installed only by ensuring a space for erecting the installation column 2, for example, in a corner of the site. Thus, an installation space which has been largely occupied by a conventional power supply section installed on the ground and an associated unit can be eliminated to significantly reduce an installation space, as compared with an arrangement where the DC power supply is installed on the ground. This makes it possible to downsize an on-ground facility.

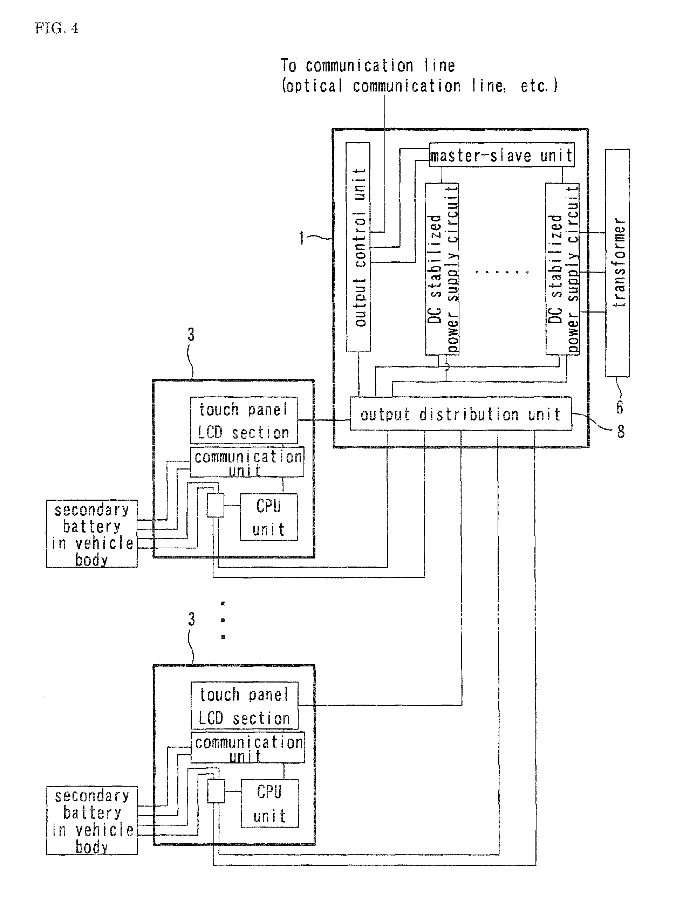

FIG. 4 is a block diagram of the DC power supply section 1 and the battery-charge operating devices 3 of the electric vehicle battery charger according to the second embodiment.

AC or DC electric power is supplied from the transformer 6 to the DC power supply section 1. The DC power supply section 1 includes: a plurality of DC stabilized power supply circuits operable to generate DC electric power: a master-slave unit operable to instruct each of the DC stabilized power supply circuits to adjust a charging output therefrom; an output control unit operable to adjust the charging output through the master-slave unit; and the output distribution unit operable to distribute outputs to the battery-charge operating devices. Each of the DC stabilized power supply circuits includes a first rectifier circuit, a high-frequency transformer, a high-frequency inverter and a second rectifier circuit, as with the battery charger illustrated in FIG. 8. The output distribution unit may be provided in a plural number depending on a scale of the battery charger.

Each of the battery-charge operating devices 3 includes a CPU unit, a communication unit, and a touch panel adapted to allow an operator or user to input an operational instruction therethrough so as to control the output control unit of the DC power supply section 1 through the CPU unit. The output control unit is operable to issue an instruction for outputting DC electric power, to the master-slave unit, so as to allow one of or a combination of two or more of the DC stabilized power supply circuits to supply DC electric power to a secondary battery of an electric vehicle connected to the battery-charge operating device 3 to charge the secondary battery. As above, a communication between each of the battery-charge devices 3 and the DC power supply section 1 can be performed in an interactive manner. Thus, the DC power supply section 1 may be installed at a distance from the battery-charge devices 3. This makes it possible to allow the battery charger as a battery-charging station to have a relatively small and compact appearance, considering urban landscape or environment.

In addition, the touch panel may have a function of paying a battery-charge fee after charging a secondary battery of an electric vehicle, via the communication unit, and/or a security function for the battery charger itself.

The CPU unit may have a function of being connected to a communication line through the communication unit so as to provide an information service, such as an Internet service, in addition to a battery-charge function.

The touch panel in a specific one of the battery-charge operating devices 3 newly connected to a secondary battery of an electric vehicle is operable to recognize an IC card or a mobile phone to permit a charging operation for the electric vehicle. The CPU unit of the specific battery-charge operating device is operable, in response to receiving an instruction from the touch panel, to instruct the output control unit of the on-column DC power supply section 1 to initiate the charging operation. Simultaneously, the CPU unit is operable to detect respective charging outputs of electric vehicles connected to the remaining battery-charge operating devices 3, and calculate an output for charging the secondary battery in a concurrent manner to set an output which allows respective secondary batteries of all the electric vehicle to be adequately charged, even in the rapid charge mode.

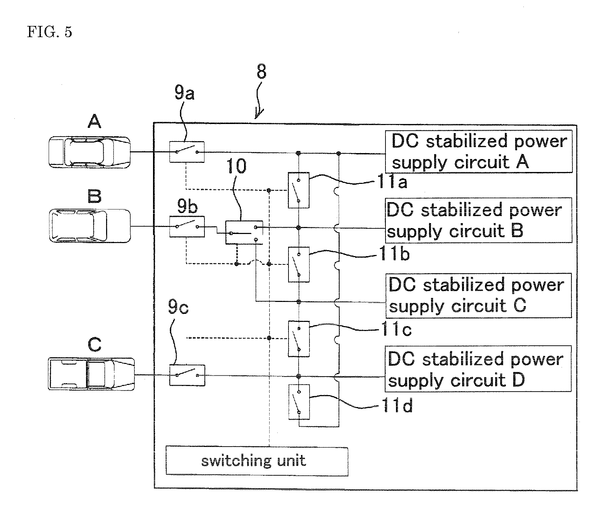

FIG. 5 is a block diagram showing one example of an output distribution system of the battery charger according to the second embodiment, wherein three electric vehicles are connected to the battery-charge operating devices.

The output distribution unit 8 is operable to supply DC electric power to each of the battery-charge operating devices via a switch 9 (9a to 9c), a selector switch 10, and an on-off switch 11 (11a to 11d).

Each of the switch 9, the selector switch 10 and the on-off switch 11 is adapted to be selectively set in an ON state and in an OFF state according to an instruction of a switching unit to achieve an adequate circuit configuration, under control of the CPU units based on respective residual battery capacities sent from the electric vehicles A, B, C connected to the battery-charge operating devices, through communication means, and calculation results of available outputs from the DC stabilized power supply circuits A to D. The switching unit is operable to switch each of the switch 9 and the selector switch 10 according to a change in charging capacity in each of the electric vehicles A, B, C in a course of elapse of a charging time, to allow an optimal concurrent charging operation fully utilizing a capability of the battery charger to be performed.

With reference to FIG. 5, one example of an operation of switching the switches 9a to 9c, the selector switch 10 and the on-off switches 11a to 11d according to an instruction of the switching unit will be described below, wherein each of the DC stabilized power supply circuits A to D suppliers an output of 15 KVA, and the DC stabilized power supply circuits A to D supply an output of 30 KVA, an output of 15 KVA and an output of 15 KVA, respectively, to the electric vehicle A, the electric vehicle B and the electric vehicle C. A residual battery capacity of the secondary battery in each of the electric vehicles is sent to a corresponding one of the battery-charge operating devices through communication means when the charging feed cable 4 is connected to the electric vehicle.

Each of the switch 9a and the on-off switch 11a is set in the ON state to supply an output of 30 KVA from the two DC stabilized power supply circuits A, B to the electric vehicle A. The switch 9b is set in the ON state, and the selector switch 10 is set in the ON state on the side of the DC stabilized power supply circuit C, to supply an output of 15 KVA from the DC stabilized power supply circuit C to the electric vehicle B. Further, the switch 9c is set in the ON state to supply an output of 15 KVA from the DC stabilized power supply circuit D to the electric vehicle C.

Then, after completion of charging for the electric vehicle B, the switch 9b, the selector switch 10 and the on-off switch 11c are set in the OFF state, in the OFF state, and in the ON state on the side of the DC stabilized power supply circuit C, respectively, to supply an output of 15 KVA from the DC stabilized power supply circuit C to the electric vehicle C.

In this manner, the switches of the output distribution unit can be efficiently switched according to the instruction of the switching unit.

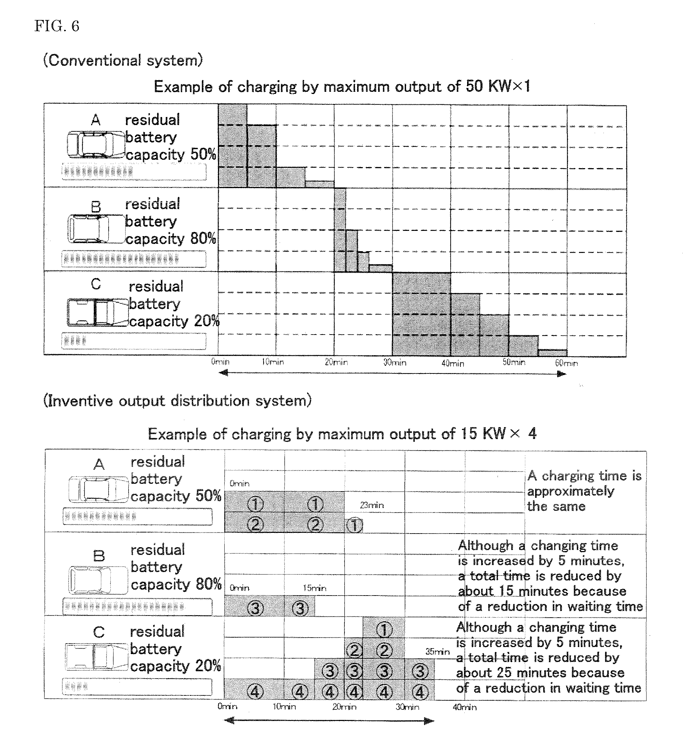

FIG. 6 is a chart showing one example of a comparison between an output distribution system of the present invention and a conventional system.

The output distribution system of the present invention is designed to simultaneously charge respective secondary batteries of a plurality of electric vehicles, whereas the conventional system is designed to generate one charging output and charge the secondary batteries one-by-one, as shown in FIG. 6. The output distribution system of the present invention and the conventional system were compared on an assumption that respective residual battery capacities in the electric vehicles A, B, C are, respectively, 50%, 80% and 20%, and the rapid charge mode is sequentially applied to the electric vehicle A, the electric vehicle B and the electric vehicle C in this order.

A battery charger having the conventional system can charge the secondary batteries one-by-one. Thus, when a plurality of electric vehicles come in a battery-charging station, a waiting time occurs, and output efficiency of the battery charger itself is poor. In contrast, the output distribution system of the present invention can adequately divide a charging capability of the battery charger itself according to respective residual battery capacities of the secondary batteries in the electric vehicles connected to the battery-charge operating devices to facilitate an efficient and optimal charging operation and a reduction in total charging time. In addition, utilization efficiency of the battery charger itself is significantly improved, which contributes to a reduction in cost.

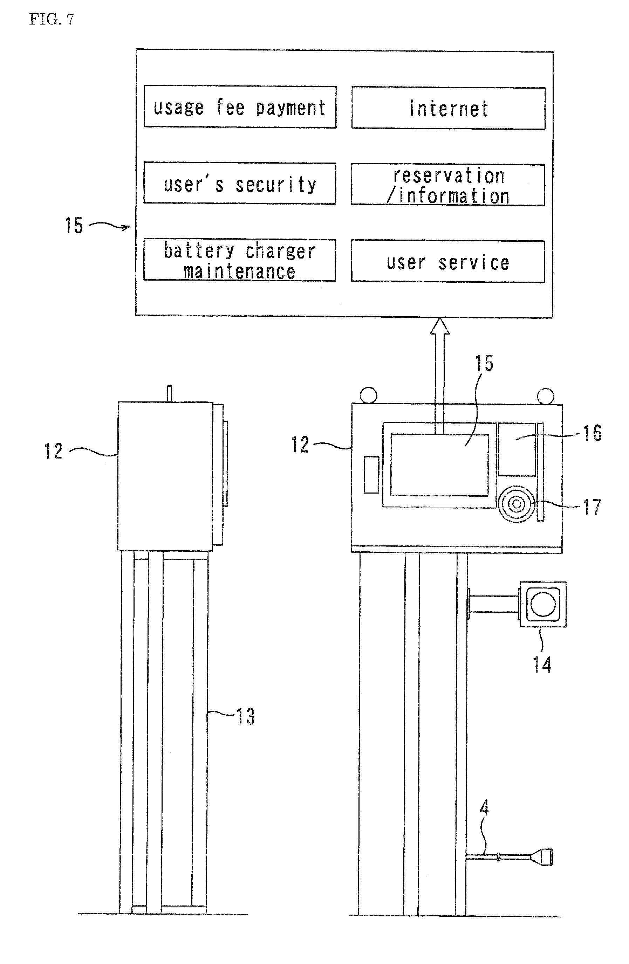

FIG. 7 is a schematic diagram showing the battery-charge operating device and an operation screen in the second embodiment.

In FIG. 7, an operation box 12 receives therein the touch panel, the communication unit and the CPU unit of the battery-charge operating device 3 illustrated in FIG. 4. The operation box 12 is supported by a column support 13. The charging feed cable 4 is led out from a lower portion of the column support 13, and a plug socket 14 is provided on the column support 13 to receive therein a charging plug at a distal end of the charging feed cable 4 during non-use of the charging feed cable 4. The operation box 12 is provided with the touch panel 15, a card reader 16, an emergency stop button 17 and others.

The touch panel 15 of the battery-charge operating device 3 is adapted to display menus of usage fee payment, user's security, battery charger maintenance, Internet, reservation/information and user service. An operator or user can select one of the displayed menus to automatically pay a battery-charge fee, or make reservation of in-vehicle Internet service, movie theater or concert, to facilitate effective utilization of a waiting time for a charging operation.

### BRIEF DESCRIPTION OF THE DRAWINGS

FIG. 1 is a block diagram showing an operation of a battery charger according to a first embodiment of the present invention.
FIG. 2 is a chart showing an example of a secondary battery capable of using a battery charger of the present invention.
FIG. 3 is an overall view schematically showing an electric vehicle battery charger according to a second embodiment of the present invention.
FIG. 4 is a block diagram of an on-column DC power supply section and a plurality of battery-charge operating devices of the electric vehicle battery charger according to the second embodiment.
FIG. 5 is a block diagram showing one example of an output distribution system of the electric vehicle battery charger according to the second embodiment, wherein three electric vehicles are connected to the battery-charge operating devices.
FIG. 6 is a chart showing one example of a comparison between an output distribution system of the present invention and a conventional system.
FIG. 7 is a schematic diagram showing the battery-charge operating device and an operation screen in the second embodiment.
FIG. 8 is a block diagram of a conventional battery charger.

### EXPLANATION OF CODES

1: DC power supply section
2: column
3: battery-charge operating device
4: charging feed cable
5: utility-line pole
6: transformer
7: feed cable
8: output distribution unit
9: switch
10: selector switch
11: on-off switch
12: operation box
12: column support
14: plug socket
15: touch panel
16: card reader
17: emergency stop button
18: battery charger
19: communication means
20: input section
21: control section
22: DC power supply section

## Claims

1. A battery charger having a plurality of connection sections for allowing a plurality of secondary batteries to be connected to respective ones thereof so as to supply electric power required by a respective one of the secondary batteries, to the respective one of the secondary batteries therethrough, the battery charger comprising:
communication means operable to acquire information from each of the secondary batteries connected to the respective ones of the connection sections;
an input section adapted to allow an operator to set up/input a charging condition for each of the secondary batteries;
a DC power supply section including a plurality of DC stabilized power supply circuits each operable to receive external electric power and supply chargeable DC electric power; and
a control section operable, based on information from the communication means and information from the input section, to control selection of one of or a combination of two or more of the DC stabilized power supply circuits to be used for supplying electric power to the respective one of the secondary batteries, adjustment of an output to be supplied to the respective one of the secondary batteries, and configuration of a line for supplying electric power to the respective one of the secondary batteries.

2. The battery charger as defined in claim 1, which is operable to simultaneously charge the plurality of secondary batteries, wherein the secondary batteries are mounted to respective ones of different types of apparatuses including an electric vehicle and a mobile power supply unit, or are different in applicable voltage or battery characteristics.

3. An electric vehicle battery charger for concurrently charging a plurality of secondary batteries mounted to respective ones of a plurality of electric vehicles, the electric vehicle battery charger comprising a plurality of battery-charge operating devices installed on the ground, and a DC power supply section installed in a site for the electric vehicle battery charger, wherein:
each of the battery-charge operating devices includes a charging feed cable which is connected to the secondary battery of a corresponding one of the electric vehicles so as to allow the secondary battery to be charged with DC electric power from the DC power supply section, and provided with a communication line for allowing communication with the corresponding electric vehicle, and a central processing unit (CPU) operable to communicatingly control distribution of outputs of the DC power supply section; and
the DC power supply section includes a plurality of DC stabilized power supply circuits each operable to convert AC or DC electric power fed thereto into predetermined DC electric power suitable for the secondary battery of a respective one of the electric vehicles, an output control unit operable, according to a signal from a respective one of the battery-charge operating devices, to issue to a master-slave unit an instruction for outputting DC electric power, and an output distribution unit operable to distribute outputs of the DC power supply section to the battery-charge operating devices, according to a residual battery capacity in each of the secondary batteries of the electric vehicles.

4. The electric vehicle battery charger as defined in claim 3, which comprises a communication line connecting the electric vehicles, the battery-charge operating devices and the DC power supply section, wherein each of the battery-charge operating devices has a function of accessing an information communication system including an Internet system, a fee payment system and an electric power feed security system, via the communication line.
